# EUROPÄISCHE PATENTSCHRIFT

(11) **EP 1 291 936 B1**
(45) Veröffentlichungstag und Bekanntmachung des Hinweises auf die Patenterteilung: **14.12.2005**
(21) Anmeldenummer: 02014662.7
(22) Anmeldetag: 03.07.2002
(51) Int. Cl.: H01M 2/12

(54) **Blockbatterie mit mehreren miteinander verschalteten elektrochemischen Zellen**
Battery pack with several interleaved electrochemical cells
Bloc de batterie avec plusieurs cellules électrochimiques entrelacées

(30) Priorität: 06.09.2001 DE 10143632
(43) Veröffentlichungstag der Anmeldung: 12.03.2003
(73) Patentinhaber: VB Autobatterie GmbH & Co. KGaA., 30419 Hannover (DE)
(72) Erfinder: Meissner, Eberhard, Dr., 31515 Wunstorf (DE)
(74) Vertreter: Lins, Edgar

(56) Entgegenhaltungen:
- EP-A- 0 523 273
- DE-A- 3 425 169
- DE-U- 8 003 869

## Beschreibung

Gegenstand der Erfindung ist eine Blockbatterie mit mehreren miteinander verschalteten elektrochemischen Zellen und mindestens einer mehreren Zellen gemeinsamen Gas-Sammelleitung, in welchen sich zündfähige Gasgemische befinden können.

Elektrochemische Speicherzellen werden in vielen Fällen in sogenannten Blockbatterien, auch Monoblock genannt, zusammengefasst. Dabei handelt es sich meist um die Serienschaltung baugleicher Akkumulatorenzellen gleicher Kapazität, die in einem gemeinsamen Blockkasten angeordnet sind. Durch die Zusammenfassung in einem gemeinsamen Gehäuse wird einerseits die Handhabung erleichtert, andererseits kann durch Einsparung von Material und durch Reduktion der Zahl der Einzelteile eine kostengünstigere Herstellung und eine höhere gewichts- und volumenbezogene Energiedichte erreicht werden.

Solche Blockbatterien sind beispielsweise bei Bleiakkumulatoren üblich. Bekannt sind solche Blockbatterien bei stationären Anwendungen, etwa in der Telekommunikation und bei Notstromversorgungseinrichtungen. Bei Bleiakkumulatoren, wie sie als Starterbatterien für Fahrzeuge verwendet werden, sind häufig 6 gleiche Zellen in Serie geschaltet, so dass sich eine Nennspannung des Blockes von 12 V ergibt. Bei stationären Batterieanlagen sind jedoch auch Blockbatterien mit einer Serienschaltung von nur 2, 3, 5 oder auch einer anderen Zahl von Zellen üblich.

Blockbatterien werden aber nicht nur bei Bleiakkumulatoren, sondern auch bei alkalischen Akkumulatoren mit den elektrochemischen Systemen Nickel/Cadmium, Nickel/Metallhydrid, Nickel/Eisen etc. sowie bei Lithium-lon-Akkumulatoren verwendet.

Je nach Art des elektrochemischen Systems können in Akkumulatoren im bestimmungsgemäßen Betrieb oder in extremen Betriebszuständen eine gewisse Menge an Gasen entstehen, die durch eine vorgesehene Öffnung der Zelle an die Umgebung abgegeben werden. Hierbei handelt es sich vor allem um Sauerstoff oder Wasserstoff oder um ein Gemisch dieser beiden Gase, jedoch kann das Gasgemisch auch andere Stoffe beinhalten. Die Menge der Gasentwicklung hängt von Typ des elektrochemischen Systems, der Bauart und den Betriebsbedingungen ab.

Bei sogenannten offenen Akkumulatorensystemen ist es üblich, eine andauernd offene Verbindung vom Inneren der Zelle zur Umgebungsluft herzustellen, in die zur Verminderung des Austrags von Flüssigkeitströpfchen Abscheideeinrichtungen wie Prallbleche, Fritten oder ähnliches eingebaut sein können.

Verschlossene Akkumulatoren dagegen sind so konzipiert, dass unter normalen Betriebsbedingungen keine oder nur sehr geringe Mengen an Gasen im Zellinneren entwickelt werden. Aus diesem Grunde baut sich kein oder nur ein sehr geringer Überdruck im Zellinneren auf, und die Verbindung des Zellinneren zur Umgebung wird im Allgemeinen durch ein einseitig wirkendes Rückschlagventil verschlossen. Dieses öffnet nur, wenn sich im Zellinneren ein gewisser Überdruck eingestellt hat, und schließt das Zellinnere gegenüber der die Zelle umgebenden Luft wieder dicht ab, nachdem der Überdruck ausgeglichen wurde.

Die im Inneren der Zelle gebildeten Gase können je nach Bauart und Betriebsbedingungen brennbar, bei ungünstigem Mischungsverhältnis von Sauerstoff und Wasserstoff auch direkt zündfähig sein. Aus diesem Grunde wird in vielen Fällen das die einzelnen Zellen verlassende Gas nicht direkt an die Umgebung abgegeben, sondern in einer die Entgasungsöffnungen der Einzelzellen der Blockbatterie verbindenden Gas-Sammelleitung zusammengefasst und an einer einzigen (oder aus Redundanzgründen auch zwei) Öffnungen von der Blockbatterie an die Umgebung abgegeben. Um zum Beispiel in einem Kraftfahrzeug, bei dem die Starterbatterie in einem relativ dicht verschlossenen Raum angeordnet ist, die Ansammlung von zündfähigen Gasgemischen zu vermeiden, kann an diese Öffnung(en) ein Schlauch angeschlossen werden, durch den die entwickelten Gase ins Freie geleitet werden.

Diese Vorgehensweise ist nicht nur bei offenen und geschlossenen Akkumulatoren üblich, sondern wird auch bei verschlossenen Akkumulatoren eingesetzt.

Die genannten Gas-Sammelleitungen dienen dazu, sich eventuell entwickelnde brennbare Gase oder Gasgemische sicher aus dem Umgebungsbereich des Blockakkumulators abzuleiten. Dabei ist es sehr wichtig, dass eine Zündung der Gase sicher vermieden wird. Kritisch ist hierbei insbesondere die Rückzündung von Flammen oder Funken außerhalb der Blockbatterie durch die Gas-Sammelleitung ins Innere des Blockakkumulators. Dies wird üblicherweise durch den Einbau von Fritten, bestehend aus porös gesintertem Kunststoff oder Glas, am Ausgang der Gas-Sammelleitung zur Umgebung vermieden.

Üblicherweise sind diese Gas-Sammelleitungen trocken, das heißt nicht mit Elektrolyt aus den Zellen der Blockbatterie benetzt. Dadurch ist die Wandung der Gas-Sammelleitungen von den Zellen elektrisch abgekoppelt, denn das Material der Blockbatterie ist im Allgemeinen ebenso wie das der Gas-Sammelleitungen ein elektrischer Isolator. Dadurch liegt die Innenwand der Gas-Sammelleitungen auf einem undefinierten Potential, und es treten keine durch die Spannung der Akkumulatorenzellen verursachte hohe Feldstärken auf.

Die Situation ändert sich aber, wenn die Innenwand der Gas-Sammelleitung durch Elektrolyt aus einer oder mehreren der Zellen benetzt wird. In diesem Fall kommt es zu einer mehr oder weniger guten elektrolytischen Ankopplung an eine oder mehreren Zellen. Kommt es zu einer Ankopplung zu mehreren der in Reihe geschalteten Einzelzellen, so fließt über diesen elektrolytischen Benetzungsfilm der gemeinsamen Gas-Sammelleitung ein ionischer Strom, da sich die in Serie geschalteten Zellen ja auf unterschiedlichem Potenzial befinden. Dieser ionische Strom bewirkt eine irreversible Stoffübertragung von einer zur anderen Zelle sowie eine Entladung der betroffenen und der dazwischen liegenden Zellen.

Ionische Ströme durch die gemeinsame Gas-Sammelleitung sind deshalb parasitäre Ströme und müssen möglichst verhindert werden. Dies geschieht durch eine möglichst lange und eine durchgehende Benetzung mit Elektrolyt vermeidende Konstruktion der Gas-Sammelleitung sowohl der Zuleitung von den Einzelzellen zur Gas-Sammelleitung, wie auch durch eine möglichst lange Wegführung der Gas-Sammelleitung selbst.

Der gegebenenfalls durch die mit Elektrolyt benetzte Gas-Sammelleitung von einer zur anderen Zelle fließende ionische Strom kann zur Elektrolyse des im Elektrolytfilm enthaltenden Wassers führen. Dadurch kann punktuell der Elektrolytfilm unterbrochen werden, wodurch örtlich sehr hohe Feldstärken auftreten können. Bei ausreichender Feldstärke kann es zu einem Überschlag kommen, der ein an dieser Stelle gegebenenfalls vorhandenes zündfähiges Gasgemisch zu zünden vermag. Die genaue Höhe dieser Feldstärken ist stark zufällig und kann kaum vorhergesagt werden, jedoch hat es sich in der Erfahrung gezeigt, dass bei Spannungen von weniger als 30 Volt im Allgemeinen keine Gefahr einer Zündung des sich in einer Gas-Sammelleitung befindlichen Gasgemisches besteht.

Bei möglichen höheren Spannungsunterschieden zwischen mit einer gemeinsamen Gas-Sammelleitung verbundenen Zellen kann es dagegen zur Zündung eines zündfähigen Gasgemisches kommen. Dies ist in der Deutschen Patentschrift 3.425.169 beschrieben und erläutert. Zur Abwendung der Gefahr von Zündungen beschreibt diese Patentschrift ein Verfahren, bei dem abwechselnd isolierende und metallisch leitfähige Abschnitte im Gasableitungssystem angeordnet werden. Die metallisch leitfähigen Abschnitte werden durch elektronische Schaltelemente, namentlich einfach durch Ohmsche Widerstände oder in einer verbesserten Ausführung durch Zener-Dioden, miteinander verbunden. Dadurch wird der Spannungsunterschied zwischen benachbarten metallisch leitfähigen Abschnitten begrenzt.

In Figur 2 der DE-PS 3.425.169 wird darüber hinaus die Verbindung des dem positiven Pol nächstgelegenen metallisch leitfähigen Abschnittes mit dem positiven Pol angedeutet.

Dieses Verfahren ist insbesondere für große Batterieanlagen, wie sie z. B. in Unterwasserfahrzeugen zum Einsatz kommen, geeignet. Hier ist es üblich, die in den einzelnen Zellen entwickelten Ladegase in einem gemeinsamen Ableitungssystem zu sammeln. Hierbei werden Zellen miteinander verbunden, die eine Spannung von vielen 100 Volt gegeneinander haben können. Eine ähnliche Situation liegt vor bei großen Brennstoffzellenaggregaten, deren Abgasleitungen ebenfalls verbunden werden, und wo auch Spannungen von mehreren 100 Volt auftreten können. Die in der DE-Patentschrift 3.425.169 beschriebenen Maßnahmen sind jedoch vergleichsweise aufwendig, da sie abschnittsweise metallisch leitfähige Ableitungskanäle und eine elektronische Beschaltung erfordern.

Bei Blockbatterien, in denen so wenige elektrochemische Zellen zusammengeschaltet sind, dass in einem vorhandenen Entgasungssystem unter allen Betriebsbedingungen keine für die Zündung eines zündfähigen Gasgemisches ausreichende Spannung erreicht werden kann, sind keine besonderen Vorsichtsmaßnahmen erforderlich. Dies gilt insbesondere für Bleiakkumulatoren mit einer Nennspannung von 12 V, wie z.B. bei den heute üblichen Starterbatterien in Kraftfahrzeugen, die auch unter extremen Bedingungen im Allgemeinen nicht mit Spannungen über 18 V beaufschlagt werden.

Konzepte für neuartige Bordnetze in Kraftfahrzeugen sehen vor, die derzeit übliche Betriebsspannung der elektrischen Komponenten von etwa 14 V auf ein neues Spannungsniveau von etwa 42 V anzuheben. Für diese Anwendung sind Batterien erforderlich, deren Nennspannung bei etwa 36 V liegt. Handelt es sich um Bleiakkumulatoren, so sind dabei Ladespannungen bis etwa 48 V vorzusehen.

Für das Spannungsniveau in solchen neuen Bordnetzen liegen inzwischen Normungsentwürfe bei internationalen Fachgremien vor, die Betriebsspannungen bis 48V mit positiven Halbwellenspitzen bis zu 50 V vorgesehen. Weiterhin sind im Ausnahmefalle Spannungsspitzen bis zu 58 V zulässig (vgl. K. Ehlers, H.-D. Hartmann, E.Meissner, Journal of Power Sources 95 (2001) 43).

Batterien für diese neuen Konzepte zur elektrischen Versorgung von Kraftfahrzeugen können aus mehreren Blockbatterien mit entsprechender Nennspannung zusammengestellt werden. Handelt es sich beispielsweise um zwei Blockbatterien mit einer Nennspannung von je 18 V, so wird bei einer Spannung im Bordnetz von maximal 58 V bei unsymmetrischer Verteilung der Spannung auf die beiden Blockbatterien ein für die Zündung kritischer Spannungswert möglicherweise gerade erreicht.

Werden drei Blockbatterien mit einer Nennspannung von je 12 V in Serie geschaltet, so sind Spannungen am Einzelblock von mehr als 30 V nur-bei äußerst ungleichmäßiger Spannungsverleilung, etwa bei Defekt-eines der Blöcke, denkbar. In diesem Falle sind also keine Risiken durch die Zündung in einer vorhandenen Gas-Sammelleitung der Einzelblöcke zu befürchten, solange diese Systeme der Einzelblöcke nicht miteinander verbunden werden.

Will man jedoch eine Batterie für dieses Bordnetz in einer einzigen Blockbatterie realisieren, so übersteigt die Spannung in der Gas-Sammelleitung dieser Blockbatterie mit Sicherheit die für eine Zündung kritischen Schwellwerte, wenn eine einzige, alle Zellen bedienende Gas-Sammelleitung vorgesehen wird. Das gleiche gilt, wenn die Gas-Sammelleitungen mehrerer in Serie geschalteter Blockbatterien, die jeweils nur eine kleine Nennspannung besitzen, verbunden werden und dadurch ein Gasableitungssystem mit insgesamt möglicherweise kritisch hoher Gesamtspannung entsteht.

Es können auch mehrere getrennte Gas-Sammelleitungen mit räumlich und elektrisch getrennten Auslässen an die Umgebung in einer Blockbatterie vorgesehen werden, so dass die Spannung an jeder von ihnen bei den anzunehmenden Spannungsverhältnissen unter dem möglicherweise kritischen Wert von 30 V bleibt. Dies erfordert allerdings für jeden dieser Auslässe eine eigene Fritte zur Vermeidung von Rückzündungen von außen, was mit erhöhten Kosten verbunden ist. Will man weiterhin an den Auslässen des Akkumulators Schläuche anbringen, um die entwickelten Gase weiter abzuleiten, so muss man mehrere Auslässe mit getrennten Schläuchen vorsehen. Dies erhöht die Gefahr einer unsachgemäßen Anbringung deutlich, insbesondere nach einem Austausch des Akkumulators.

Aufgabe der Erfindung ist es, eine einfache und kostengünstige Vorgehensweise zur Vermeidung des Risikos der Zündung von zündfähigen Gasgemischen in Gas-Sammelleitungen von Blockbatterien anzugeben, welche Zellen miteinander verbindet, die im Betrieb eine Gesamtspannung von mehr als 30 V gegeneinander erreichen können, und die insbesondere bei Blockbatterien mit vergleichsweise niedriger Nennspannung (wie z. B. für ein Kraftfahrzeug-Bordnetz mit 42 V Nennspannung) Anwendung findet.

Diesem gleichgestellt sind Verschaltungen von mehreren Blockbatterien kleinerer Nennspannung in Serie unter Verbindung ihrer jeweiligen Gas-Sammelleitungen, wobei in der Gas-Sammelleitung jeder einzelnen Blockbatterie zwar keine kritisch hohen Spannungen auftreten, wohl aber in dem durch die Verbindung der Gas-Sammelleitungen entstandenen gesamten Entgasungssystem.

Diese Aufgabe wird erfindungsgemäß bei einer Blockbatterie der eingangs genannten Art durch die kennzeichnenden Merkmale des Anspruchs 1 gelöst. In den Unteransprüchen sind vorteilhafte Ausgestaltungen angegeben.

Bei einer erfindungsgemäßen Blockbatterie mit einer mehreren Zellen gemeinsamen Gas-Sammelleitung, in welchen sich zündfähige Gasgemische befinden können, besteht die Innenwandung dieser Gas-Sammelleitung im Wesentlichen aus einem elektrischen Isolator, besitzt jedoch in mindestens einem Bereich eine Auskleidung aus einem elektronisch leitfähigen Material, welche in elektrisch leitfähigem Kontakt zu Elektroden oder dem Elektrolyten einer Einzelzelle steht, wobei die Abstände der so gewählten Zellen von den Endpolen der Blockbatterie und gegebenenfalls untereinander so gewählt sind, dass unter allen vorgesehenen Betriebsbedingungen der Blockbatterie zwischen diesen Bereichen keine Spannungen über etwa 30 V auftreten können.

Der Bereich der Gas-Sammelleitung, welcher eine Auskleidung aus einem elektronisch leitfähigen Material besitzt, liegt beispielsweise zumindest teilweise zwischen den Eintrittsöffnungen zweier benachbarter Zellen und steht in elektrisch leitfähigen Kontakt zu Elektroden oder dem Elektrolyten einer dieser Zelle.

Die elektronisch leitfähige Innenauskleidung der Gas-Sammelleitung kann aus einem Rohr oder Netzrohr bestehen, dessen Material ein Metall, ein leitfähiger Kunststoff, oder ein mit leitfähigen Zusätzen gefüllter Isolator, vorzugsweise ein mit leitfähigen Zusätzen gefüllter Kunststoff, ist. Insbesondere ist eine Innenauskleidung aus Blei oder einer Bleilegierung geeignet.

Die Auskleidung kann auch in Form einer elektronisch leitfähigen Fritte oder eines sonstigen offenporigen porösen Materials vorliegen, die aus Metall, einem leitfähigen Kunststoff, oder einem mit leitfähigen Zusätzen gefüllten Isolator, vorzugsweise einem mit leitfähigen Zusätzen gefüllten Kunststoff besteht.

Weiterhin ist es möglich, in die Gas-Sammelleitung ein elektronisch leitfähiges offenporiges poröses Material, z.B. eine Kordelschnur, einzulegen, wobei das Material ein Metall, ein leitfähiger Kunststoff, oder ein mit leitfähigen Zusätzen gefüllter Isolator, vorzugsweise ein mit leitfähigen Zusätzen gefüllter Kunststoff, ist. Diese Kordelschnur ist vorzugsweise spiralig gewunden. Das elektronisch leitfähige offenporige poröse Material steht in elektrischen Kontakt zum Elektrolyten oder zu einer oder mehreren Elektroden von einer oder mehreren der in Reihe geschalteten Speicherzellen.

Die Zellenräume der in der Blockbatterie zusammengefassten elektrochemischen Speicherzellen können über einseitig wirkende Öffnungsventile mit der Gas-Sammelleitung verbunden sein. Der elektrische Widerstand der Anbindung der leitfähigen Auskleidung / Fritte / Kordelschnur an die Elektroden bzw. den Elektrolyten ist so bemessen, dass er niedriger ist als der Widerstand der Gas-Sammelleitung zwischen zwei benachbarten Zellen, wenn dieser vollständig mit Elektrolyt gefüllt wäre.

Insbesondere bei den vorgenannten Blockbatterien mit einer Nennspannung von etwa 36 V bis 40 V ist es ausreichend, für eine elektrische Anbindung der Gas-Sammelleitung zwischen zwei Zellen etwa in der Mitte der Serienschaltung an die Elektroden oder den Elektrolyten zu sorgen. Dadurch wird die möglicherweise in der Gas-Sammelleitung auftretende Spannung auf maximal die Hälfte der Blockspannung begrenzt. Da die Hälfte der maximal vorgesehenen Betriebsspannung von 58 V kleiner ist als der kritische Spannungswert von ca. 30 V, wird erfindungsgemäß das Risiko einer Zündung vermieden.

Dazu genügt bei Akkumulatoren mit einer Nennspannung von etwa 36 bis 40 V eine einzige elektrische Anbindung der Gas-Sammelleitung an die Elektroden oder den Elektrolyten einer Zelle. Auch wenn mehrere Anbindungen vorgesehen werden, stellt der Verzicht auf eine elektronische Beschaltung einen erheblichen Vorteil dar. Bei Blockbatterien mit höheren Nennspannungen sind mehrere elektrische Anbindungen der Gas-Sammelleitung an die Elektroden oder den Elektrolyten von in Serie geschalteten Zellen erforderlich, wobei der Abstand dieser Zellen so zu wählen ist, dass die Spannungsdifferenz zwischen ihnen im Betrieb etwa 30 V nicht übersteigt.

Der im Rahmen der Erfindung erforderliche elektrische Abgriff zu einer Elektrode oder zum Elektrolyten in einer Zelle kann gleichzeitig für andere Zwecke genutzt werden. Eine solche Nutzung von Verbindungen aus dem die Elektroden und den Elektrolyten umschließenden Raum zum Außenbereich zu mehreren verschiedenen Zwecken anstelle mehrerer solcher Verbindungen ist insbesondere aus fertigungstechnischer Sicht und zur Kostenersparnis vorteilhaft, da oft hohe Ansprüche an die Dichtigkeit gegenüber Flüssigkeiten (z.B. Elektrolyt) und/oder Gasen an solche Verbindungen gestellt werden.

An solchen anderen Zwecken zu nennen sind insbesondere Verfahren zur Beurteilung des Zustandes der Blockbatterie, etwa des Ladezustandes, der Leistungsbereitschaft, oder der Alterung, bei denen nicht nur die Gesamtspannung mehrerer in Serie geschalteter Speicherzellen, sondern auch die Spannung an einzelnen Zellen oder Gruppen von Zellen zur Zustandsbeurteilung herangezogen wird. Im einfachsten Falle wird mit Hilfe von Zwischenabgriffen an Zellen oder Zellengruppen die Gleichmäßigkeit der Spannungen an den vom gleichen Strom durchflossenen Zellen in verschiedenen Betriebszuständen beurteilt. Solche Verfahren und zur Durchführung der Verfahren geeignete Vorrichtungen sind beispielsweise den Dokumenten DE 19751987 A1 und DE 19810746 A1 zu entnehmen.

Ein im Rahmen der vorliegenden Erfindung vorgesehener elektrische Abgriff zu einer Elektrode kann aber auch gleichzeitig für ein der Blockbatterie zugeordnetes und insbesondere für ein in sie integriertes Schaltelement oder Sicherungselement genutzt werden, welches den Stromfluß durch die Blockbatterie unterbrechen kann.. Dazu werden zwei in Serie zu schaltende Zellen nicht direkt verbunden, sondern sie werden über das Schalt- oder Sicherungselement verbunden. Auch hierzu sind elektrische Verbindungen aus dem die Elektroden und den Elektrolyten umschließenden Raum zum Außenbereich erforderlich, die erfindungsgemäß gleichzeitig für die in dieser Erfindung beschriebene elektronische Anbindung der Gas-Sammelleitung genutzt werden.

Über die beschriebenen Anbindung kann auch eine gezielte Vergleichmäßigung von Einzelzellen der Batterie gesteuert werden. Die elektrische Anbindung der leitfähigen Auskleidung / Fritte / Kordelschnur an die Elektroden bzw. den Elektrolyten ist dann verbunden mit einem der Blockbatterie zugeordneten, vorzugsweise einem in sie integrierten Mittel, z.B. einer Schaltvorrichtung, welches durch aktive Beaufschlagung dieser Anbindung mit einem Strom oder einer Spannung, gemessen gegen einen der Endpole oder eine weitere solche Anbindung an die Elektroden bzw. den Elektrolyten einer anderen Zelle der Blockbatterie, eine Vergleichmäßigung des Zustandes der Einzelzellen der Blockbatterie vornimmt.

Verfahren zur Vergleichmäßigung des Zustandes von in Serie geschalteten Speicherzellen sind beispielsweise beschrieben in der Dissertation von Christoph Siedle, Universität Karlsruhe, 1997 (Fortschrittsberichte VDI, Reihe 21/Elektrotechnik, Nr.245, VDI-Verlag Düsseldorf 1998). Die EP 0939 475 A2 offenbart ein Verfahren zur Vergleichmäßigung des Zustandes zweier in Serie geschalteter Blockbatterien.

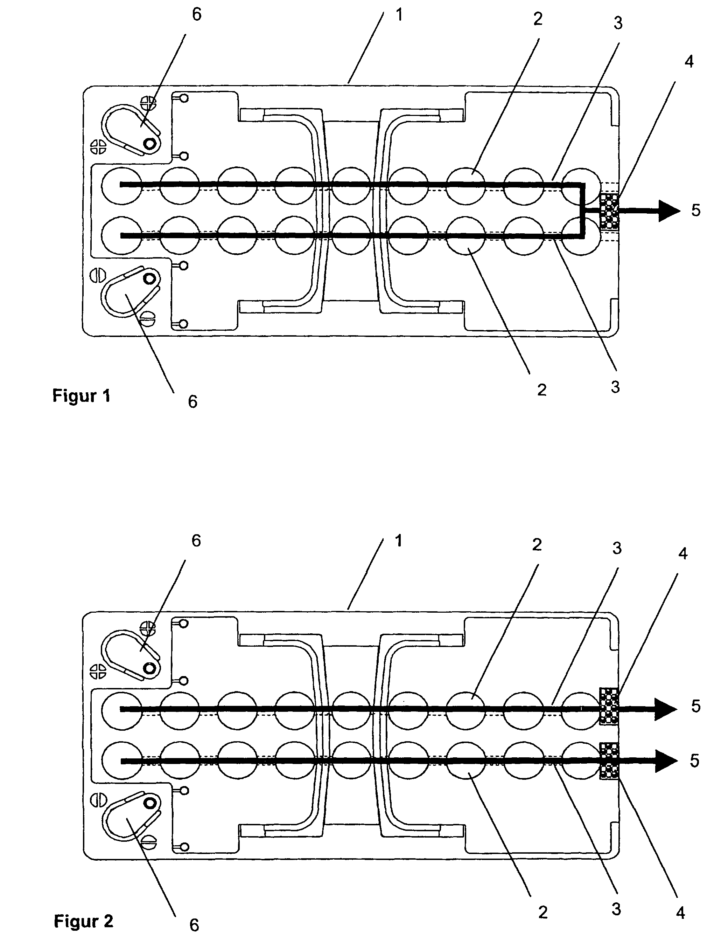

Im Folgenden ist der Gegenstand der Erfindung anhand der Figuren 1 bis 6 näher erläutert. Die Figuren 1 bis 3 zeigen schematisch die Anordnung von Gas-Sammelleitungen auf einer Blockbatterie. Die Figuren 4 bis 6 zeigen schematisch die elektrische Anbindung der Gas-Sammelleitung an Elektroden oder Elektrolyt einer Zelle.

Figur 1 zeigt eine Blockbatterie 1 gemäß dem Stand der Technik mit zwei Endpolen 6 und einer einzigen Gas-Sammelleitung 3, die die Entgasungsöffnungen 2 mehrerer Zellen miteinander verbindet. An der einzigen Auslass-Stelle 5 zur Umgebung befindet sich nur eine Fritte 4 zur Vermeidung von Rückzündungen ins Innere. Es gibt nur einen Auslass 5, an den ein Schlauch angeschlossen werden kann. Wenn jedoch die Gesamtzahl der von der einzigen Gas-Sammelleitung versorgten Zellen so groß ist, dass die Spannung im Betrieb über etwa 30 V ansteigen kann (z.B. bei 18 Zellen in Serie), besteht bei Benetzung des Inneren der Gas-Sammelleitung mit Elektrolyt das Risiko einer Zündung. Dieses Risiko ist unabhängig von der Wahl des Ortes der Auslass-Stelle 5 der Gas-Sammelleitung 3.

Figur 2 zeigt eine Blockbatterie 1 gemäß dem Stand der Technik mit zwei getrennten Gas-Sammelleitungen 3. An den beiden Auslass-Stellen 5 zur Umgebung befinden sich vorzugsweise je eine Fritte 4 zur Vermeidung von Rückzündungen ins Innere. Wenn die Spannung zwischen den Zellen in jedem der beiden Teile der Blockbatterien im Betrieb nicht über etwa 30 V ansteigt, wie dies z.B. bei je 9 Bleiakkumulatorenzellen in Serie angenommen werden kann, so besteht auch bei Benetzung des Inneren der Gas-Sammelleitungen mit Elektrolyt kein Risiko einer Zündung. Hier müssen zwei rückzündungshemmende Fritten 4 eingesetzt werden, und die beiden Auslässe 5 müssen streng getrennt bleiben und dürfen nicht mit einem gemeinsamen Schlauch verbunden werden, in dem eine Elektrolytbrücke entstehen könnte.

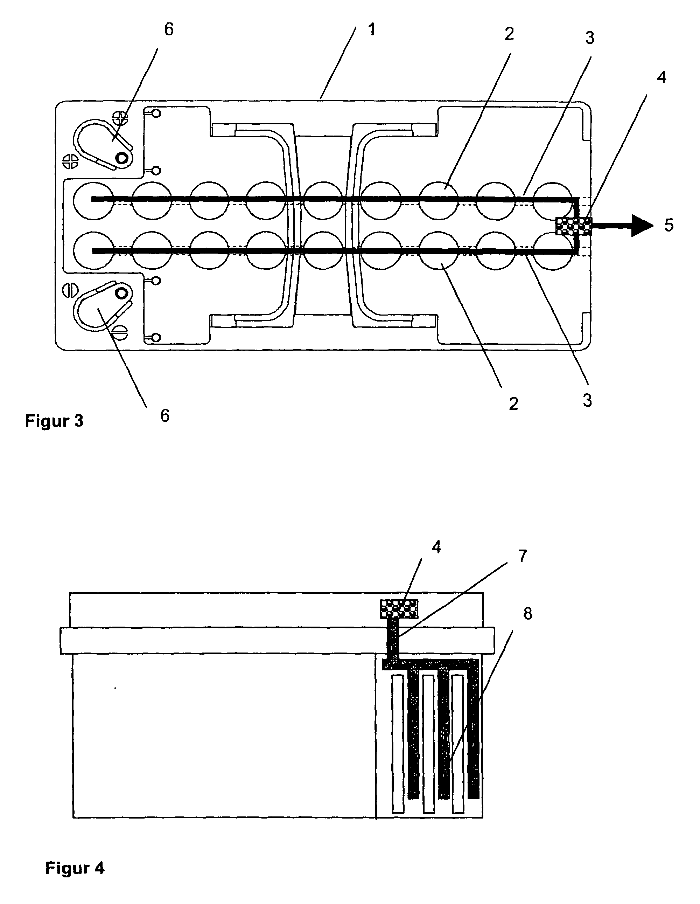

Figur 3 zeigt eine erfindungsgemäße Ausbildung einer Blockbatterie 1 mit einer einzigen Gas-Sammelleitung 3. An der einzigen Auslass-Stelle 5 zur Umgebung befindet sich eine Fritte 4 zur Vermeidung von Rückzündungen ins Innere. Im Gegensatz zu Figur 2 ist diese jedoch so angeordnet, dass sie die Gas-Sammelleitung 3 in zwei Bereiche unterteilt, deren Gesamtzahl von versorgten Zellen so klein ist, dass die Spannung im Betrieb jeweils nicht über etwa 30 V ansteigen kann. Die Fritte 4 wird erfindungsgemäß aus leitfähigem Material hergestellt und elektrisch mit dem Elektrolyten oder einer Elektrode einer Zelle verbunden, die in der Serienschaltung der Zellen der Blockbatterie so angeordnet ist, dass auch ihre Spannung im Betrieb jeweils nicht über etwa 30 V gegen einen Endpol bzw. eine weitere so zur elektrischen Anbindung der Gas-Sammelleitung 3 verwendeten Zelle ansteigen kann. Dadurch besteht bei Benetzung des Inneren der Gas-Sammelleitung 3 mit Elektrolyt kein Risiko einer Zündung.

Figur 4 zeigt einen Querschnitt durch den Deckel einer Blockbatterie 1 an der Stelle, an der in die Gas-Sammelleitung 3 die in Figur 3 dargestellte elektronisch leitfähige Fritte 4 eingesetzt ist. Diese ist mit den Elektroden 8 einer Polarität einer benachbarten Zelle verbunden.

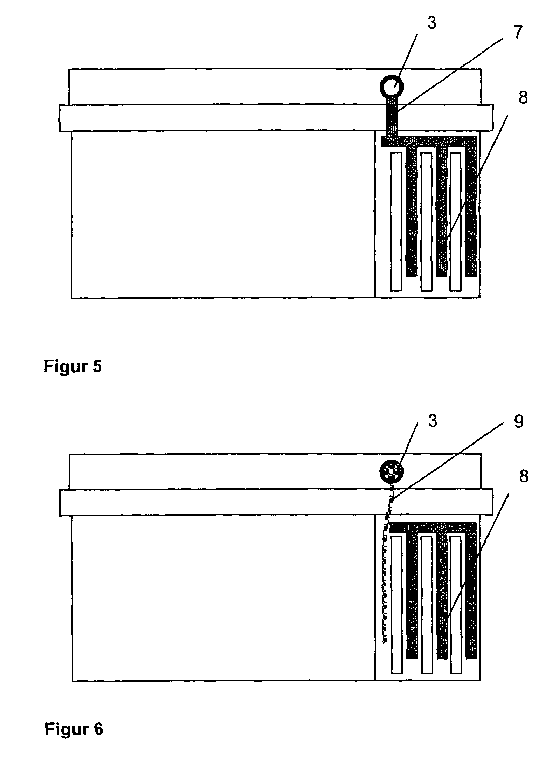

Figur 5 zeigt einen Querschnitt durch den Deckel einer Blockbatterie 1 an der Stelle, an der die Gas-Sammelleitung 3 elektronisch leitfähige Auskleidung hat. Diese beispielsweise aus einem Bleiring bestehende Auskleidung ist mit den Elektroden 8 einer Polarität einer benachbarten Zelle verbunden.

Figur 6 zeigt einen Querschnitt durch den Deckel einer Blockbatterie 1 an der Stelle, an der in die Gas-Sammelleitung 3 eine Kordelschnur 9 aus elektronisch leitfähigem Material eingelegt ist. Diese ist mit dem Elektrolyten einer benachbarten Zelle verbunden.

## Patentansprüche

1. Blockbatterie mit mehreren miteinander verschalteten elektrochemischen Zellen und mindestens einer mehreren Zellen gemeinsamen Gas-Sammelleitung, in welchen sich zündfähige Gasgemische befinden können, **dadurch gekennzeichnet, dass** die Innenwandung der Gas-Sammelleitung (3) im Wesentlichen elektrisch isolierend ausgebildet ist und in mindestens einem Bereich eine Auskleidung aus einem elektronisch leitfähigen Material besitzt, welche in elektrisch leitfähigem Kontakt zu Elektroden (8) oder dem Elektrolyten einer Einzelzelle steht, wobei die Abstände der ausgewählten Zellen von den Endpolen der Blockbatterie (1) und gegebenenfalls untereinander so gewählt sind, dass unter allen vorgesehenen Betriebsbedingungen der Blockbatterie (1) zwischen diesen Bereichen keine Spannungen über 30 V auftreten.

2. Blockbatterie nach Anspruch 1, **dadurch gekennzeichnet, dass** der Bereich der Gas-Sammelleitung (3), welcher eine Auskleidung aus einem elektronisch leitfähigen Material besitzt, zumindest teilweise zwischen den Eintrittsöffnungen zweier benachbarter Zellen liegt, und in elektrisch leitfähigen Kontakt zu Elektroden oder dem Elektrolyten einer dieser Zelle steht.

3. Blockbatterie nach Anspruch 1 oder 2, **dadurch gekennzeichnet, dass** die im Bereich von einzelnen Zellen elektronisch leitfähige Innenauskleidung der Gas-Sammelleitung (3) aus einem Rohr oder Netzrohr besteht, welches aus Metall, leitfähigem Kunststoff oder einem mit leitfähigen Zusätzen gefüllten Isolator, vorzugsweise aus einem mit leitfähigen Zusätzen gefüllten Kunststoff, besteht

4. Blockbatterie nach Anspruch 3, **dadurch gekennzeichnet, dass** die elektronisch leitfähige Innenauskleidung der Gas-Sammelleitung (3) aus Blei oder einer Bleilegierung besteht.

5. Blockbatterie nach einem oder mehreren der Ansprüche 1 bis 4, **dadurch gekennzeichnet, dass** die elektronisch leitfähige Auskleidung der Gas-Sammelleitung (3) ein elektronisch leitfähiges offenporiges poröses Material, vorzugsweise eine Fritte (4), ist

6. Blockbatterie, **dadurch gekennzeichnet, dass** in die Gas-Sammelleitung (3) ein elektronisch leitfähiges offenporiges poröses Material, vorzugsweise eine Kordelschnur (9), eingelegt ist, welches aus Metall, einem leitfähigen Kunststoff oder einem mit leitfähigen Zusätzen gefüllten Isolator, vorzugsweise aus einem mit leitfähigen Zusätzen gefüllten Kunststoff besteht und welches im elektrischen Kontakt mit einer oder mehreren Elektroden (8) von einer oder mehreren der in Reihe geschalteten Speicherzellen steht oder mit deren Elektrolyt benetzt ist.

7. Blockbatterie nach einem oder mehreren der Ansprüche 1 bis 6, **dadurch gekennzeichnet, dass** die Zellenräume der in der Blockbatterie zusammengefassten elektrochemischen Speicherzellen über ein einseitig wirkendes Öffnungsventil mit der Gas-Sammelleitung (3) verbunden sind.

8. Blockbatterie nach einem oder mehreren der Ansprüche 1 bis 7, **dadurch gekennzeichnet, dass** der elektrische Widerstand der Anbindung der leitfähigen Auskleidung / Fritte / Kordelschnur an die Elektroden bzw. den Elektrolyten so bemessen ist, dass er niedriger ist als der Widerstand der Gas-Sammelleitung (3) zwischen zwei benachbarten Zellen, wenn dieser vollständig mit Elektrolyt gefüllt wäre.

9. Blockbatterie nach einem oder mehreren der Ansprüche 1 bis 8, **dadurch gekennzeichnet, dass** die elektrische Anbindung der leitfähigen Auskleidung / Fritte / Kordelschnur an die Elektroden bzw. den Elektrolyten verbunden ist mit einem der Blockbatterie zugeordneten, vorzugsweise einem in sie integrierten Schalt- oder Sicherungselement, welches den Stromfluß durch die Blockbatterie unterbrechen kann.

10. Blockbatterie nach einem oder mehreren der Ansprüche 1 bis 8, **dadurch gekennzeichnet, dass** die elektrische Anbindung der leitfähigen Auskleidung / Fritte / Kordelschnur an die Elektroden bzw. den Elektrolyten verbunden ist mit einem der Blockbatterie zugeordneten, vorzugsweise einem in sie integrierten Mittel, welches durch aktive Beaufschlagung dieser Anbindung mit einem Strom oder einer Spannung, gemessen gegen einen der Endpole oder eine weitere solche Anbindung an die Elektroden bzw. den Elektrolyten einer andern Zelle der Blockbatterie, eine Vergleichmäßigung des Zustandes der Einzelzellen der Blockbatterie vornimmt.

11. Batterieverbund, zusammengeschaltet aus mehreren elektrochemischen Zellen oder mehreren Blockbatterien, die jeweils mehrere miteinander verschaltete elektrochemischen Zellen umfassen, und mindestens einer mehreren der elektrisch verschalteten Zellen gemeinsamen Gas-Sammelleitung, in welchen sich zündfähige Gasgemische befinden können, **dadurch gekennzeichnet, dass** die Innenwandung der Gas-Sammelleitung im Wesentlichen elektrisch isolierend ausgebildet ist und in mindestens einem Bereich eine Auskleidung aus einem elektronisch leitfähigen Material besitzt, welche in elektrisch leitfähigem Kontakt zu Elektroden (8) oder dem Elektrolyten einer Einzelzelle steht, wobei die Abstände der ausgewählten Zellen von den Endpolen der elektrischen Verschaltung und gegebenenfalls untereinander so gewählt sind, dass unter allen vorgesehenen Be-triebsbedingungen zwischen diesen Bereichen keine Spannungen über 30 V auftreten.

## Claims

1. Monobloc battery having a number of interconnected electrochemical cells and having at least one gas collecting line, which is common to a number of cells and which may contain explosive gas mixtures, **characterized in that** the inner wall of the gas collecting line (3) is designed to be essentially electrically insulating and, in at least one area, has a lining composed of an electron-conductive material, which makes electrically conductive contact with electrodes (8) or the electrolyte in an individual cell, with the distances between the selected cells and the end poles of the monobloc battery (1) and possibly the distances between the selected cells, being chosen such that no voltages of more than 30V occur between these areas in any of the intended operating conditions for the monobloc battery (1).

2. Monobloc battery according to claim 1, **characterized in that** the area of the gas collecting line (3), which has a lining composed of an electron-conductive material, is at least partially located between the inlet openings of two adjacent cells, and makes electrically conductive contact with electrodes or with the electrolyte in one such cell.

3. Monobloc battery according to claim 1 or 2, **characterized in that** the inner lining, which is electron-conductive in the area of the individual cells, of the gas collecting line (3) comprises a tube or mesh tube which is composed of metal, conductive plastic or an insulator filled with conductive additives, preferably of a plastic which is filled with conductive additives.

4. Monobloc battery according to claim 3, **characterized in that** the electron-conductive inner lining of the gas collecting line (3) is composed of lead or of a lead alloy.

5. Monobloc battery according to one or more of claims 1 to 4, **characterized in that** the electron-conductive lining of the gas collecting line (3) is an electron-conductive open-pore porous material, preferably a frit (4).

6. Monobloc battery, **characterized in that** an electron-conductive open-pore porous material, preferably a cabled cord (9) is inserted in the gas collecting line (3), which cabled cord (9) is composed of metal, a conductive plastic or an insulator filled with conductive additives, preferably of a plastic filled with conductive additives, and which makes electrical contact with one or more electrodes (8) of one or more series-connected storage cells, or is wetted with their electrolyte.

7. Monobloc battery according to one or more of claims 1 to 6, **characterized in that** the cell areas of the electrochemical storage cells which are combined in the monobloc battery are connected to the gas collecting line (3) via a nonreturn valve.

8. Monobloc battery according to one or more of claims 1 to 7, **characterized in that** the electrical resistance of the link between the conductive lining frit/cabled-cord and the electrodes or electrolyte is of such a magnitude that it is less than the resistance of the gas collecting line (3) between two adjacent cells, assuming that they are completely filled with electrolyte.

9. Monobloc battery according to one or more of claims 1 to 8, **characterized in that** the electrical link between the conductive lining/frit/cabled cord and the electrodes or the electrolyte is connected to a switching or protection element which is associated with the monobloc battery, is preferably integrated in it, and can interrupt the current flow through the monobloc battery.

10. Monobloc battery according to one or more of claims 1 to 8, **characterized in that** the electrical link between the conductive lining/frit/cabled cord and the electrodes or electrolyte is connected to a means which is associated with the monobloc battery, preferably to a means which is integrated in it, and which unifies the state of the individual cells in the monobloc battery by an active application to this link of a current or of a voltage measured with respect to one of the end poles, or a further such link to the electrodes or to the electrolyte of another cell in the monobloc battery.

11. Battery assembly, composed of a number of electrochemical cells or a number of monobloc batteries, which each have a number of interconnected electrochemical cells, and at least one gas collecting line, which is common to a number of the electrically interconnected cells and in which explosive gas mixtures may be located, **characterized in that** the inner wall of the gas collecting line is designed to be essentially electrically insulating and, in at least one area, has a lining composed of an electron-conductive material, which makes electrically conductive - contact with electrodes (8) or the electrolyte in an individual cell, with the distances between the selected cells and the end poles of the electrical interconnection and possibly the distances between the selected cells, being chosen such that no voltages of more than 30V occur between these areas in any of the intended operating conditions.

## Revendications

1. Batterie avec plusieurs cellules électrochimiques entrelacées et au moins une conduite collectrice de gaz commune à plusieurs cellules, dans laquelle peuvent se trouver des mélanges gazeux inflammables,
**caractérisé en ce que**
la paroi intérieure de la conduite collectrice de gaz (3) est essentiellement isolée électriquement et possède, au moins dans une zone, un revêtement en matériau électroniquement conducteur qui est en contact électrique avec des électrodes (8) ou l'électrolyte d'une cellule individuelle, les distances entre les cellules sélectionnées et les pôles terminaux de la batterie (1) et éventuellement entre elles étant sélectionnées de telle sorte qu'aucune tension supérieure à 30V ne se produise entre ces zones, dans toutes les conditions de fonctionnement prévues de la batterie (1).

2. Batterie selon la revendication 1,
**caractérisé en ce que**
la zone de la conduite collectrice de gaz (3) qui possède un revêtement en matériau électroniquement conducteur est située au moins partiellement entre les ouvertures d'entrée de deux cellules adjacentes, et est en contact électriquement conducteur avec des électrodes ou l'électrolyte d'une de ces cellules.

3. Batterie selon la revendication 1 ou 2,
**caractérisé en ce que**
le revêtement intérieur de la conduite collectrice de gaz (3) électroniquement conducteur dans la zone de cellules individuelles, est constitué par un tube ou un tube réticulaire en métal, en plastique conducteur ou en isolant rempli d'adjuvants conducteurs, de préférence en plastique rempli d'adjuvants conducteurs.

4. Batterie selon la revendication 3,
**caractérisé en ce que**
le revêtement intérieur de la conduite collectrice de gaz (3), électroniquement conducteur, est en plomb ou en alliage de plomb.

5. Batterie selon l'une ou plusieurs des revendications 1 à 4,
**caractérisé en ce que**
le revêtement intérieur de la conduite collectrice de gaz (3), électroniquement conducteur, est un matériau poreux à pores ouverts électroniquement conducteur, de préférence une fritte (4).

6. Batterie,
**caractérisé en ce qu'**
un matériau poreux à pores ouvert électroniquement conducteur, de préférence un fil moleté (9), est posé dans la conduite collectrice de gaz (3), il est en métal, en plastique conducteur ou en un isolant rempli d'adjuvants conducteurs, de préférence en plastique rempli d'adjuvants conducteurs, et est en contact électrique avec une ou plusieurs électrodes (8) d'une ou plusieurs des cellules de mémoire montées en série ou mouillé avec leur électrolyte.

7. Batterie selon l'une ou plusieurs des revendications 1 à 6,
**caractérisé en ce que**
les compartiments des cellules de mémoire électrochimiques réunies dans la batterie sont reliés à la conduite collectrice de gaz (3) par une soupape d'ouverture agissant d'un côté.

8. Batterie selon l'une ou plusieurs des revendications 1 à 7,
**caractérisé en ce que**
la résistance électrique de la liaison entre le revêtement conducteur/fritte/fil moleté et les électrodes ou les électrolytes est calculée de telle sorte qu'elle soit plus basse que la résistance de la conduite collectrice de gaz (3) entre deux cellules adjacentes, si celles-ci étaient entièrement remplies d'électrolyte.

9. Batterie selon l'une ou plusieurs des revendications 1 à 8,
**caractérisé en ce que**
la liaison électrique entre le revêtement conducteur/fritte/fil moleté et les électrodes ou les électrolytes est reliée à un élément de commutation ou de sécurité associé à la batterie, de préférence intégré au bloc, qui peut interrompre le flux de courant traversant la batterie batterie.

10. Batterie selon l'une ou plusieurs des revendications 1 à 8,
**caractérisé en ce que**
la liaison électrique entre le revêtement conducteur/fritte/fil moleté et les électrodes ou les électrolytes est reliée à un moyen associé à la batterie, de préférence intégré à celle-ci, qui effectue une mesure comparative de l'état des cellules individuelles de batterie en alimentant activement cette liaison avec un courant ou une tension, mesurée à un des pôles terminaux ou une autre liaison de la sorte aux électrodes ou électrolytes d'une autre cellule du Batterie batterie.

11. Interconnexion de batterie interconnectée à partir de plusieurs cellules électrochimiques entrelacées ou plusieurs batteries qui comprennent plusieurs cellules électrochimiques entrelacées et au moins une conduite collectrice de gaz commune à plusieurs cellules électriquement entrelacées, dans laquelle peuvent se trouver des mélanges gazeux inflammables,
**caractérisée en ce que**
la paroi intérieure de la conduite collectrice de gaz est isolée électriquement et possède, au moins dans une zone, un revêtement en matériau électroniquement conducteur qui est en contact électrique avec des électrodes (8) ou l'électrolyte d'une cellule individuelle, les distances entre les cellules sélectionnées et les pôles terminaux de l'interconnexion électrique et éventuellement entre elles étant sélectionnées de telle sorte qu'aucune tension supérieure à 30V ne se produise entre ces zones, dans toutes les conditions de fonctionnement prévues.
